# EUROPEAN PATENT SPECIFICATION

(11) **EP 1 992 534 B1**
(45) Date of publication and mention of the grant of the patent: **06.03.2013**
(21) Application number: 08008823.0
(22) Date of filing: 13.05.2008
(51) Int. Cl.: B60S 3/04, B60S 3/00

(54) **Car washing apparatus**
Fahrzeugwaschanlage
Dispositif de lavage de voiture

(30) Priority: 16.05.2007 IT AN20070012 U
(43) Date of publication of application: 19.11.2008
(73) Proprietor: O.M.G. di Geminiani Gino, 63044 Comunanza (AP) (IT)
(72) Inventor: Geminiani, Gino, 63044 Comunanza (AP) (IT)
(74) Representative: Cacciamani, Clizia

(56) References cited:
- FR-A- 2 653 399
- GB-A- 2 243 129
- JP-A- 2002 211 366
- US-A- 4 981 523
- US-A1- 2003 145 877
- US-A1- 2004 238 016
- US-A1- 2005 235 521
- US-B1- 6 709 530

## Description

The present invention relates to an apparatus for washing motor vehicles or the like, and particularly to an automatic apparatus for washing motor vehicles or the like.

Car wash systems wherein sensor means are provided to detect the shape of the vehicle to be washed are known in the art; they can be ultrasonic sensors as disclosed in DE102004061214, or optical-type sensors as disclosed In WO97/13664. According to the information collected by these sensor means, movement of brush rolls can be managed without a risk of damage to vehicle body.

Apparatuses for washing motor vehicles can be of automatic type, i.e. can be arranged in the so-called "self service" system, or they can be operated by hand. Generally, automatic apparatuses use a plurality of brush rolls provided with water- and cleaning fluid-supply jets; while these systems have achieved a high level of operability, they still have a drawback of a quite shallow cleaning of the vehicle, resulting in acceptable but poor end results.

On the other hand, systems having high pressure hydro-cleaners, whose jet gives definitely superior cleaning results, substantially have to be manually monitored by the user, therefore they have noticeable problems in terms both of time employed for washing and of engagement of the user in order to carry out the washing operation.

In US4981523 Is described a fluid distribution apparatus which includes a sensor for developing control signals representative of the profile of a vehicle to be deaned and a tube for distributing fluid. The tube is movable horizontally in directions parallel to the path of a vehicle being cleaned and vertically toward and away from the path of the vehicle.

The document GB2243129 describes a vehicle washing apparatus comprising two carriages mounted on rails to move horizontally. A vehicle to be washed would be parked beneath the carriages, between the posts. The carriage carries washing brushes. The drying carriage carries air outlets for drying air.

In US2004238016 is described a vehicle cleaning system comprising a horizontally movable carriage suspended above the vehicle, and a vertically moveably support mechanism suspended from said carriage.

Therefore, aim of the present invention is to provide an apparatus which is able to wash motor vehicles and the like in a highly automated manner by means of pressurized water jets which can achieve excellent cleaning results.

Thus, an object of the present invention is an apparatus for washing motor vehicles, comprising at least one washing element which is movably mounted on a support structure, said support structure delimiting an area in which a vehicle to be washed is to be placed, said apparatus being provided with means to detect and acquire the shape and the outer surface of the vehicle, said means being interfaced to a central control unit, said central control unit being used to monitor said washing element. Particularly, said apparatus further comprises a drying element for the vehicle being washed, said drying element being movably mounted on the same support structure.

In a preferred embodiment, said washing element, as well as said drying element, are each mounted on a respective carriage which is movable on guides supported by a plurality of posts, said guides and said carriage being arranged in such a way as to form a portal structure below which said vehicle to be washed is positioned. Moreover, said carriage includes guides which are orthogonal with respect to those whereon it is movable, and a saddle carrying said washing or drying element is slidably moved on said orthogonal guides in both directions. Naturally, all driving means are interfaced to the central control unit.

In the preferred embodiment, the washing element is an operating head which can supply water, a cleaning fluid, a greasing fluid, and other products, said operating head being rotatably mounted on a support which is movable along a direction perpendicular to the plane on which said carriage and said saddle are moved. Similarly, in the preferred embodiment, the drying element also includes a nozzle supplying a temperature-controllable air jet, mounted on a support which is movable along a direction perpendicular to the plane on which said carriage and said saddle are moved.

The system for acquiring the shape and surface of the vehicle comprises detection means, preferably optical-type detection means, which are advantageously positioned on the support structure in such a way as to acquire all the features characteristic of the vehicle to be washed. The acquisition of the profile and surface features of the vehicle allows the control unit to manage the movements of the washing element in the most suitable manner. Particularly, said detection means include a plurality of video cameras.

Further advantages and specifications will be apparent from the following description of an embodiment of the apparatus according to the present invention, which is provided by way of illustration, and not by way of limitation, with reference to the accompanying drawings, wherein:
Figure 1 is a perspective view of an embodiment of the apparatus according to the present invention; and
Figure 2 is a perspective view of a detail relative to said apparatus.

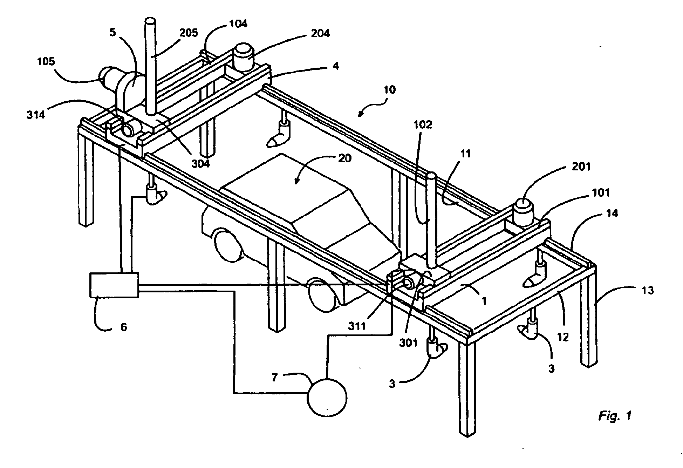

Figure 1 shows an apparatus according to the present invention for washing vehicles such as, for example, a motor vehicle 20 as schematically illustrated in the figure; reference numeral 10 denotes a support structure which is consisted of two longitudinal members 11 interconnected at the respective ends by two cross members 12 and supported by a plurality of equally spaced posts 13. Guides 14 are positioned on the longitudinal members, and a carriage 1 for the washing element (not shown in the figure) is movably coupled to said guides 14, said carriage being provided with a ratio-motor 201 serving as driving means. A saddle 301 is movably mounted on guides 101 of the carriage 1, said guides 101 being arranged perpendicularly to the guides 14 on which the same carriage is moved. The saddle 301 is coupled to a shaft 102 which allows the washing element to be moved in a vertical direction; the saddle 301 is provided with a ratio-motor 311. Moreover, the saddle 301 is coupled to a compressor 7 which provides a suitable pressure to the water, cleaning fluid and other fluids used during the washing operation.

At the opposite end of the support frame 10 there is a similar carriage 4 which can be moved by driving means 204, said carriage 4 being provided with a saddle 304 which is slidably moveable on corresponding guides 104. The saddle 304 is provided with a fan 5 used to dry the motor vehicle, and the fan 5 is provided with driving means 105; the operating head of the fan (not shown in the figure) is placed at one end of a shaft 205, and it can be moved by the same shaft in the vertical direction.

Both carriages are connected to a central control unit 6 to which detection means 3 are also connected; said detection means 3 are positioned on said support frame 10 in such a way as to ensure a complete visualization and acquisition of the shape and surface of the vehicle to be washed.

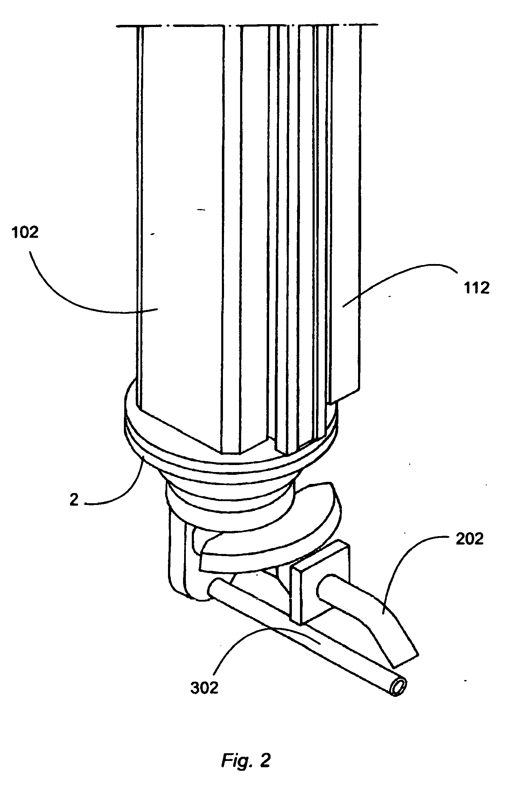

Figure 2 illustrates a detail concerning the washing element of the apparatus according to the invention; a head 2 is coupled to the shaft 102 which is inserted in the saddle 301 at the upper end thereof, said shaft 102 being movable with respect to the saddle 301 in a direction perpendicular to the laying plane of the same saddle 301 through a guide 112; the head 2 can be rotated with respect to the axis of said shaft 102, and it is provided with two supplying nozzles 202 and 302. As herein exemplified, the nozzle 202 supplies a washing fluid and water, while the nozzle 302 supplies wax to polish the motor vehicle.

The operation of the apparatus according to the present invention will become apparent from the following. When the motor vehicle 20 has been positioned below the support structure 10, the central control unit receives a suitable control and starts a process to acquire the morphology of the motor vehicle through the detection means, which are preferably optical detection means such as video cameras or the like. When the complete morphology of the motor vehicle has been acquired, the central control unit can suitably set up a washing program to be performed by the washing element 2. Naturally, while setting up the washing program, the type of washing to be performed and additional finishing operations as greasing and the like will also be taken into account; note that, although Figure 2 illustrates the washing operating head 2 provided with only two supplying nozzles, other nozzles may be provided on the operating head. Moreover, each nozzle can be used for different functions. Obviously, the control unit 6 can also adjust the pressure produced by the compressor 7 to which it is connected.

At this point, the washing element is moved according to the paths set up by the control unit 6 and calculated in such a way as to wash the motor vehicle 20 in the most suitable manner; the handling occurs through the movement of the carriage 1, the movement of the saddle 301, the movement of the shaft 102, and the rotation of the head 2 around its shaft. When the washing operations and optional finishing operations such as application of protective wax, tyre black and bumper polish have been completed, the central control unit operates the drying element 5 which is moved along the path set up by the control unit and obtained by acquiring the morphology of the motor vehicle to be washed, as in the case of the washing element. Advantageously, the control unit can store washing and drying paths suitable for different models of vehicles in a database; the control unit can than compare the data acquired for a given vehicle with the data stored in its database in order to identify the model of the vehicle, so as to optimize the washing and drying operations.

Therefore, the apparatus according to the present invention can perform a variety of operations with a high level of precision, and it can achieve results which are comparable to those of manual washing systems in terms of accuracy, with an apparent advantage in terms of operation; in addition, the apparatus according to the present invention has a much safer approach than known apparatuses with respect to the integrity of the vehicle body to be washed.

## Claims

1. Apparatus for washing motor vehicles, comprising at least a washing element (2) which is movably mounted on a support structure (10), said support structure delimiting an area in which a vehicle (20) to be washed is to be placed, said apparatus being provided with means (3) to detect and acquire the outer morphology of the vehicle, said means being interfaced to a central control unit (6), said central control unit (6) being used to monitor said washing element (2), in which said washing element (2) is mounted on a carriage (1) which is movable on guides (14) supported by said support structure (10), said support structure (10) comprising at least a couple of longitudinal members (11) and at least a couple of cross members (12) supported by a plurality of posts (13), below which structure (10) said vehicle (20) to be washed is positioned, said carriage (1) being provided with driving means (201), the said carriage (1) includes guides (101) which are skewly oriented with respect to the guides (14) whereon said carriage (1) is movable, and a saddle (301) carrying said washing element (2) is slidably moved on said guides (101) in both directions, said saddle (301) being provided with driving means (311); said washing element is an operating head (2) provided with a plurality of nozzles (202, 302) to supply water, a cleaning fluid, a greasing fluid, and other products, said operating head (2) being rotatably mounted on a shaft (102) which is movable along a direction perpendicular to the plane on which said carriage (1) and said saddle (301) are moved and said washing element (2) being connected to compressor means (7) to regulate the pressure of the supplied fluids; said compressor means (7) and said driving means (201, 311) being interfaced to said control unit (6).

2. Apparatus according to Claim 1, in which said apparatus further comprises a drying element (5) for the vehicle (20) being washed, said drying element (5) being movably mounted on the support structure (10), said drying element being also monitored by said central control unit (6).

3. Apparatus according to Claim 2, wherein said drying element (5) is mounted on a carriage (4) which is movable on guides (14) supported by said support structure (10), said support structure (10) comprising at least a couple of longitudinal members (11) and at least a couple of cross members (12) supported by a plurality of posts (13), below which structure (10) said vehicle (20) to be washed is positioned, said carriage (4) being provided with driving means (204), the said carriage (4) includes guides (104) which are skewly oriented with respect to the guides (14) whereon said carriage (4) is movable, and a saddle (304) carrying said drying element (5) is slidably moved on said guides (104) in both directions, said saddle (304) being provided with driving means (314).

4. Apparatus according to the Claim 3, wherein said driving means (204, 314) are interfaced to said control unit (6).

5. Apparatus according to the Claim 3 or 4, wherein said drying element (5) includes at least one nozzle supplying a temperature-controllable air jet, said nozzle being mounted on a shaft (205) which is movable along a direction perpendicular to the plane on which said carriage (4) and said saddle (304) are moved.

6. Apparatus according to anyone of preceding Claims 1 to 5, wherein said means for acquiring the morphology of the vehicle include optical-type detection means (3), which are suitably positioned on the support structure (10) to acquire all the features characteristic of the vehicle to be washed.

7. Apparatus according to Claim 6, wherein said detection means include a plurality of video cameras (3).

## Patentansprüche

1. Vorrichtung zum Waschen von Kraftfahrzeugen, umfassend wenigstens ein Waschelement (2) die beweglich auf einer Tragstruktur (10) montiert ist, wobei besagte Tragstruktur eine Fläche abgrenzt, in der ein zu waschende Fahrzeug (20) zu platzieren ist, wobei besagte Vorrichtung mit Mitteln (3) zur Erkennung und Erfassung der äußeren Morphologie des Fahrzeugs vorgesehen ist, wobei besagten Mittel gekoppelt mit einer zentralen Steuereinheit (6) sind, wobei besagte zentrale Steuereinheit (6) zur Überwachung besagtes Waschelementes (2) dient, wobei besagtes Waschelement (2) auf einem Schlitten (1) montiert ist, der auf Führungen (14), die durch besagte Tragstruktur (10) abgestützt werden, beweglich ist, wobei besagte Tragstruktur (10) wenigstens ein Paar von Längsträger (11) und wenigstens ein Paar von Querträgern (12) umfasst, und durch eine Vielzahl von Pfosten (13) unterstützt wird, unterhalb dessen Struktur (10) besagter zu waschende Fahrzeug (20) positioniert ist, besagter Schlitten (1) mit Antriebsmitteln (201) vorgesehen ist, wobei besagter Schlitten (1) Führungen (101) umfasst, die bezüglich der Führungen (14) schräg orientiert sind, worauf besagter Schlitten (1) beweglich ist, und ein Sattel (301), der das Waschelement (2) trägt, wird verschiebbar auf besagten Führungen (101) in beiden Richtungen bewegt, wobei besagter Sattel (301) mit Antriebsmitteln (311) vorgesehen ist; wobei besagtes Waschelement ein Betriebskopf (2) mit einer Vielzahl von Düsen (202, 302) ist , um Wasser, ein Reinigungsfluid ein Schmierfluid und andere Produkte zuzuführen, wobei besagter Betriebskopf (2) drehbar auf einem Schaft (102) montiert ist, der entlang einer Richtung senkrecht zu der Ebene ist, auf der der Schlitten (1) und der Sattel (301) bewegt werden, und die Waschelement (2) mit dem Kompressor (7), um den Druck der zugeführten Flüssigkeit zu regeln, verbunden ist, wobei besagte Kompressormittel (7) und besagte Antriebsmittel (201, 311) mit besagter Steuereinheit (6) verbunden sind.

2. Vorrichtung nach Anspruch 1, bei dem besagte Vorrichtung weiterhin ein Trocknerelement (5) für das zu waschende Fahrzeug (20) umfasst, wobei besagtes Trocknerelement (5) beweglich auf der Tragstruktur (10) montiert ist, wobei besagtes Trocknerelement auch durch besagte zentrale Steuereinheit (6) überwachten wird.

3. Vorrichtung nach Anspruch 2, wobei besagtes Trocknerelement (5) auf einem Schlitten (4), der auf Führungen (14), die durch besagte Tragstruktur (10) abgestützt werden, montiert ist, wobei besagte Tragstruktur (10) wenigstens ein paar Längsträger (11) und wenigstens ein Paar von Querstreben (12), die durch eine Vielzahl von Pfosten (13) unterstützt werden, umfasst, unterhalb dessen Struktur (10) besagtes zu waschende Fahrzeug (20) positioniert ist, wobei besagter Schlitten (4) mit Antriebsmitteln (204) vorgesehen ist, wobei besagter Schlitten (4) Führungen (104) umfasst" die bezüglich der Führungen (14) schräg orientiert sind, worauf besagter Schlitten (4) bewegbar ist, und ein Sattel (304), der besagtes Trocknerelement (5) trägt, wird auf besagten Führungen (104) in beiden Richtungen gleitend bewegt, wobei besagter Sattel (304) mit Antriebsmitteln (314) vorgesehen ist.

4. Vorrichtung nach dem Anspruch 3, in dem besagte Antriebsmittel (204, 314) mit besagter Steuereinheit (6) gekoppelt sind.

5. Vorrichtung nach dem Anspruch 3 oder 4, in den besagtes Trocknerelement (5) wenigstens eine zuführende einen temperierbaren Luftstrahl Düse umfasst, wobei besagte Düse auf einem Schaft (205) montiert ist, der entlang einer Richtung senkrecht zu der Ebene, worauf besagter Schlitten (4) und besagter Sattel (304) bewegt werden, bewegbar ist.

6. Vorrichtung nach einem der vorhergehenden Ansprüche 1 bis 5, in den besagte Mittel zur Erfassung der Morphologie des Fahrzeugs optischen Detektionsmittel (3) umfassen , die in geeigneter Weise auf der Tragstruktur (10) positioniert sind, zum Erwerben von allen Merkmale, die charakteristisch für das zu waschenden Fahrzeug sind.

7. Vorrichtung nach Anspruch 6, in dem besagte Detektionsmittel eine Vielzahl von Videokameras (3) umfassen.

## Revendications

1. Appareil de lavage des véhicules automobiles, comprenant au moins un élément de lavage (2) qui est monté mobile sur une structure de support (10), dite structure de support délimitant une région où un véhicule (20) à laver doit être placée, le dit appareil étant pourvu avec des moyens (3) de détection et de acquisition de la morphologie extérieure du véhicule, le dits moyens étant interfacés à une unité centrale de contrôle (6), la dite unité centrale de contrôle (6) étant utilisée pour surveiller le dit élément de lavage (2), où le dit élément de lavage (2) est monté sur un chariot (1) qui est mobile sur guides (14) supportées par dite structure de support (10), la structure de support (10) comprenant au moins une couple de membres longitudinaux (11) et au moins une couple de membres transversaux (12) supportés par une pluralité de pieux (13), sous la dite structure (10) étant positionné le dit véhicule (20) à laver, le dit chariot (1) étant pourvu de moyens d'entraînement (201), le dit chariot (1) comprenant des guides (101) qui sont orientées gauches en respect à les guides (14) sur lesquelles le dit chariot (1) est mobile, et une selle (301) transportant le dit élément de lavage (2) est déplacé coulissant sur le dites guides (101) en tous les deux directions, la dite selle (301) étant pourvue de moyens d'entraînement (311); le dit élément de lavage (2) étant pourvu d'une pluralité de buses (202, 302) pour alimenter de l'eau, du fluide de lavage, du fluide de graissage et d'autres produits, la dite tête de travail (2) étant montée en rotation sur un arbre (102) qui est mobile le long d'une direction perpendiculaire au plan où le dit chariot (1) e la dite selle (301) sont déplacés et le dite élément de lavage (2) étant engagé avec de moyens compresseurs (7) pour régler la pression des fluides alimentés; les dits moyens compresseurs (7) et les dits moyens d'entraînement (201, 311) étant interfacé avec la dite unité de contrôle (6).

2. Appareil selon la revendication 1, où le dit appareil comprends d'avantage un élément de séchage (5) pour le véhicule (20) à laver, le dit élément de séchage (5) étant monté mobile sur la structure de support (10), le dit élément de séchage (5) étant de même surveillé par la dite unité centrale de contrôle (6).

3. Appareil selon la revendication 2, où le dit élément de séchage (5) est monté sur un chariot (4) qui est mobile sur guides (14) supportées par dite structure de support (10), dite structure de support (10) comprenant au moins une couple de membres longitudinaux (11) et au moins une couple de membres transversaux (12) supportés par une pluralité de pieux (13), sous la dite structure (10) étant positionné le dit véhicule (20) à laver, le dit chariot (4) étant pourvu de moyens d'entraînement (204), le dit chariot (4) comprenant des guides (104) qui sont orientées gauches en respect à les guides (14) sur lesquelles le dit chariot (4) est mobile, et une selle (301) transportant le dit élément de séchage (5) est déplacé coulissant sur le dites guides (104) en tous les deux directions, la dite selle (304) étant pourvue de moyens d'entraînement (314).

4. Appareil selon la revendication 3, où le dit moyens d'entraînement (204, 314) sont interfacés avec la dite unité centrale de contrôle (6).

5. Appareil selon la revendication 3 ou 4, où le dit élément de séchage (5) comprends au moins une buse alimentant un jet d'air à température contrôlable, la dit buse étant montée sur un arbre (205) qui est mobile le long d'une direction perpendiculaire au plan sur lequel le dit chariot (4) e la dite selle (304) sont déplacés.

6. Appareil selon une quelconque des revendications de 1 à 5, où les moyens (3) de détection et de acquisition de la morphologie extérieure du véhicule comprennent des moyens de détection optiques qui sont (10).

7. Appareil selon la revendication 6, où les dits moyens de détection comprennent une pluralité de caméras vidéo (3).
